**Europäisches Patentamt**

**European Patent Office**

**Office européen des brevets**

(19)

(11) Veröffentlichungsnummer : **0 042 048 B1**

(12) # EUROPÄISCHE PATENTSCHRIFT

(45) Veröffentlichungstag der Patentschrift :
09.10.85

(21) Anmeldenummer : 81102688.9

(22) Anmeldetag : 09.04.81

(51) Int. Cl.⁴ : **H 02 K 23/40**

(54) **Gleichstrommaschine mit vollgeblechtem magnetischen Kreis und vergrössertem Luftspalt im Wendepolbereich.**

(30) Priorität : 14.06.80 DE 3022396

(43) Veröffentlichungstag der Anmeldung :
23.12.81 Patentblatt 81/51

(45) Bekanntmachung des Hinweises auf die Patenterteilung : 09.10.85 Patentblatt 85/41

(84) Benannte Vertragsstaaten :
AT CH IT LI SE

(56) Entgegenhaltungen :
DE-A- 2 048 905
DE-B- 1 940 427

(73) Patentinhaber : **Felten & Guilleaume Energietechnik GmbH**
**Schanzenstrasse 24**
**D-5000 Köln 80 (DE)**

(72) Erfinder : **Grass, Helmut, Ing. grad.**
**Hannoversche 25**
**D-2890 Nordenham (DE)**
Erfinder : **Seiler, Wolfram Dr.-Ing.**
**Schulstrasse 33**
**D-2890 Nordenham (DE)**

EP 0 042 048 B1

## Beschreibung

Die Erfindung betrifft eine Gleichstrommaschine mit einem vollgeblechten magnetischen Kreis gemäß dem Oberbegriff des Anspruchs 1.

Um eine unverzögerte Änderung des Wendefeldflusses bei schnellen Stromänderungen zu erreichen, ist es notwendig, den gesamten magnetischen Kreis der Gleichstrommaschine geblecht aufzubauen. Schnelle Stromänderungen treten bevorzugt bei modernen thyristorgesteuerten Gleichstromantrieben auf.

Während man bei der üblichen Ausführung der Gleichstrommaschine einzelne ausgeprägte Haupt- und Wendepole verwendet, ist es bekannt, bei Gleichstrommaschinen mit vollgeblechtem magnetischen Kreis ein gleichmäßig genutetes Ständerblechpaket einzusetzen und die Ständerwicklungen in mehreren Nuten verteilt anzuordnen. Dies ist insbesondere bei Verwendung einer Kompensationswicklung vorteilhaft. Eine derartige Gleichstrommaschine ist bereits aus der DE-B 19 40 427 bekannt.

Die Verteilung der Wicklungen in den einzelnen Nuten muß hierbei so erfolgen, daß es zu keiner Störung zwischen dem Haupt- und Wendefeld kommt. Insbesondere bei Maschinen mittlerer und größerer Leistung, hat es sich als vorteilhaft erwiesen, Wendefeld- und Hauptfeldspule in durch einen Zahn getrennten Nuten unterzubringen. Hierdurch entsteht eine Hauptfeldlücke, die größer ist als die Wendepolbreite, welche je nach den Erfordernissen durch einen oder mehrere Ständerzähne gebildet wird.

Ein gleichmäßig genutetes Blechpaket bietet einerseits die Möglichkeit, die Wicklungen mit Einziehvorrichtungen in äußerst rationeller Weise einzubringen. Andererseits ergibt die Verteilung der Ständerwicklung in vielen Nuten einen wesentlich verbesserten Wärmeübergang von der Wicklung zum Ständereisen, so daß die Ausnutzung dieser Maschinen gesteigert werden kann. Dieser Vorteil kommt insbesondere bei geschlossenen, oberflächengekühlten Maschinen zur Geltung, bei denen die Verlustabfuhr im wesentlichen durch Wärmeleitung zum Gehäuse stattfindet.

Die aus DE-B 19 40 427 bekannte Ausführung des Ständerblechpaketes mit gleichen Nuten am gesamten Umfang ergibt jedoch einen gleich großen Luftspalt für den Hauptpol- und Wendepolbereich, im Gegensatz zu der herkömmlichen Ausführung mit Einzelpolen, deren Hauptpolluftspalt kleiner als der Wendepolluftspalt ist. Der Hauptpolluftspalt wird hierbei so klein gewählt, wie er mit Rücksicht auf die mechanischen Verhältnisse, die Feldverzerrung und die Oberwelleneinflüsse gewählt werden kann, damit bei möglichst geringer Erregerleistung eine möglichst hohe Induktion und damit hohe Ausnutzung der Maschine erreicht wird. Der Wendefeldluftspalt hingegen wird größer gewählt, um eine gute Linearität zwischen Ankerstrom und Wendefeldfluß zu erreichen, die Einstellgenauigkeit für den Wendefeldfluß zu vergrößern und die Luftspaltstreuung im Wendefeldbereich zu vermindern. Ein Luftspalt gleicher Größe für Haupt- und Wendefeld muß daher einen Kompromiß zwischen den obengenannten Anforderungen erfüllen und führt daher nicht zu einer optimalen Auslegung der Maschine.

Es ist ferner vorteilhaft, den Luftspalt über der Wendepolbreite nicht konstant auszuführen, sondern zu den Polkanten hin zu erweitern. Damit ergibt sich eine Wendefeldinduktionskurve, die ein Maximum in der Polmitte zeigt und zu den Polkanten hin abfällt. Durch diesen Induktionsverlauf wird eine lineare Stromänderung in der kommutierenden Spule begünstigt. Die Summenkurve der Induktivität der an der Stromwendung beteiligten Spulen, welche die Höhe der Stromwendespannung bestimmt, zeigt nämlich über der Wendezonenbreite für eine Ankernut immer höhere Werte in der Mitte der Wendezone gegenüber Anfang und Ende. Eine Anpassung der Wendefeldinduktion an die Induktionskurve ist somit bei konstantem Luftspalt über dem Ankerumfang nicht möglich.

Eine Gleichstrommaschine mit einem vollgeblechten magnetischen Kreis, dessen Ständer mit verkürzten Wendepolen ausgeführt ist, ist bereits bekannt (DE-A 20 48 905), bei welcher die Wendepolluftspalte größer als die Hauptpolluftspalte sind. Läuferseitig besitzt der Ständer dieser Maschine Nuten, in denen die Ständerwicklungen über mehrere Nuten verteilt angeordnet sind. Hier ist allerdings eine ungleiche Nutteilung vogesehen, um breitere Wendepole gegenüber den Hauptpolen und breitere Nuten zu beiden Seiten der Wendepole gegenüber den übrigen Nuten zu erreichen. Diese Maßnahme dient dazu, den Gesetzmäßigkeiten in der Kommutierungszone nachzukommen, da diese Zone für die Wendepolbreite bestimmend ist. Allerdings führt die ungleichmäßige Nutung zu einer gegenüber der gleichmäßigen Nutung aufwendigeren Herstellungsweise und dennoch nur in einem sehr geringen Maße zu dem vorausgehend erläuterten Vorteil einer zunehmenden Erweiterung des Wendepolflußspaltes zu den Polkanten hin.

Der vorliegenden Erfindung liegt daher, ausgehend vom Inhalt der DE-A 20 48 905, die Aufgabe zugrunde, eine einfacher herzustellende Gleichstrommaschine der eingangs geschilderten Art mit dem Ziel zu entwickeln, den Luftspalt im Bereich der Wendepole bis zu den Hauptpolen zu beiden Seiten der Symmetrieachse der Wendepole zunehmend zu vergrößern und damit die Form des Wendefeldes zu beeinflussen, um eine optimale Anpassung an die Induktivitätskurve der Ankernut bei einer Verminderung der Streueinflüsse im Bereich zwischen Haupt- und Wendepol zu erreichen.

Diese Aufgabe wird erfindungsgemäß durch die im Anspruch 1 angegebenen konstruktiven Maßnahmen, bzw. in besonderer Weise durch die Merkmale des Anspruches 2 gelöst.

Die mit der Erfindung erzielten Vorteile bestehen darin, daß die Luftspalte im Bereich der Haupt- und Wendepole eine optimale Auslegung erhalten. Damit werden die Streueinflüsse im Bereich zwischen den Haupt- und Wendepolen verkleinert, womit nicht nur die Leistung erhöht, sondern auch die Kommutierung verbessert wird.

Vorteilhafte Weiterbildungen der Erfindung sind den Unteransprüchen 3 bis 5 zu entnehmen.

Sofern der Wendepol durch mehr als einen Ständerzahn gebildet wird, können diese zu einem massiven Zahn vereinigt werden, wobei die Nuten, die innerhalb der Wendepole liegen und nicht mit Wicklungen belegt werden, fortfallen (Anspruch 3). Dies ist stanztechnisch ohne Schwierigkeiten möglich. Dadurch werden Nutungsoberwellen im Wendefeld völlig vermieden. Die Verkürzung der Wende- und Hauptpole erfolgt vorteilhafterweise durch Nachstanzen (Anspruch 5). Dies ist ein verhältnismäßig einfacher Arbeitsgang.

Ebenfalls aus Gründen der vereinfachten Fertigung und zumal die Hauptpollücke größer als die Wendepolbreite ist, ist es besonders vorteilhaft, wenn man die radiale Lage der Nuträume so wählt und die Länge der Nutschlitze zwischen nichtverkürzten Ständerzähnen derart bemißt, daß alle Nuten eine gleich große Öffnung aufweisen (Anspruch 4). Dies dient der sicheren Befestigung der Wicklungen. Bei Maschinen mit Kompensationswicklung führt diese Verlängerung der Nutschlitze zu einem weiteren Vorteil durch Vergrößerung der Nutstreuung für die Kompensationswicklung und damit der Ankerkreisinduktivität der Maschinen. Da die Ankerkreisinduktivität kompensierter Maschinen wegen der Aufhebung des Ankerquerfeldes durch die Kompensationswicklung an sich niedrig ist, wirkt sich die Induktivitätsvergrößerung bei diesen Maschinen besonders günstig aus. Die Welligkeit des Ankerstromes wird nämlich bei Thyristorspeisung durch die größere Induktivität vermindert, was zu einer thermischen Entlastung der Maschine und zu einer Verminderung der Kommutierungsbeanspruchungen führt.

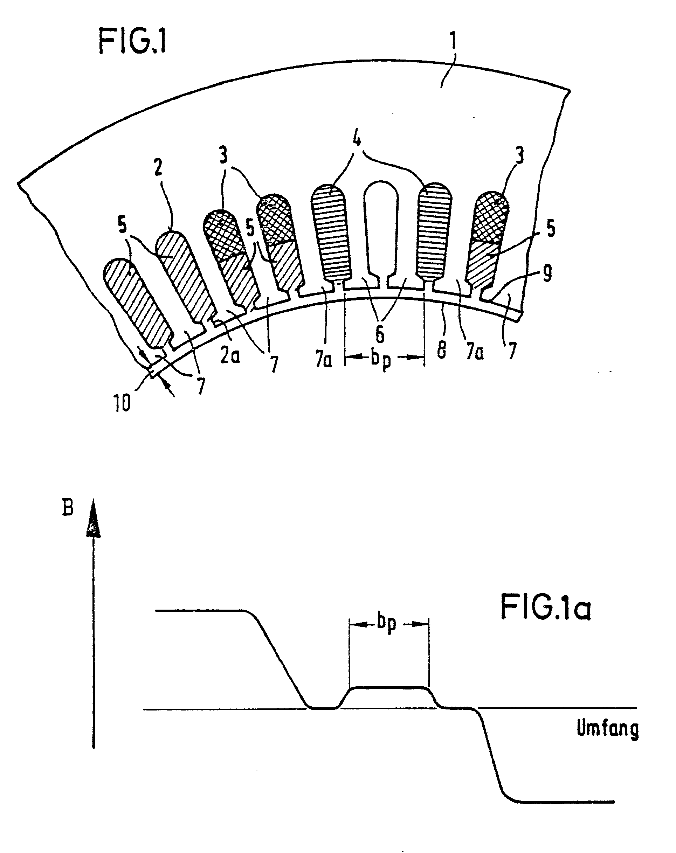

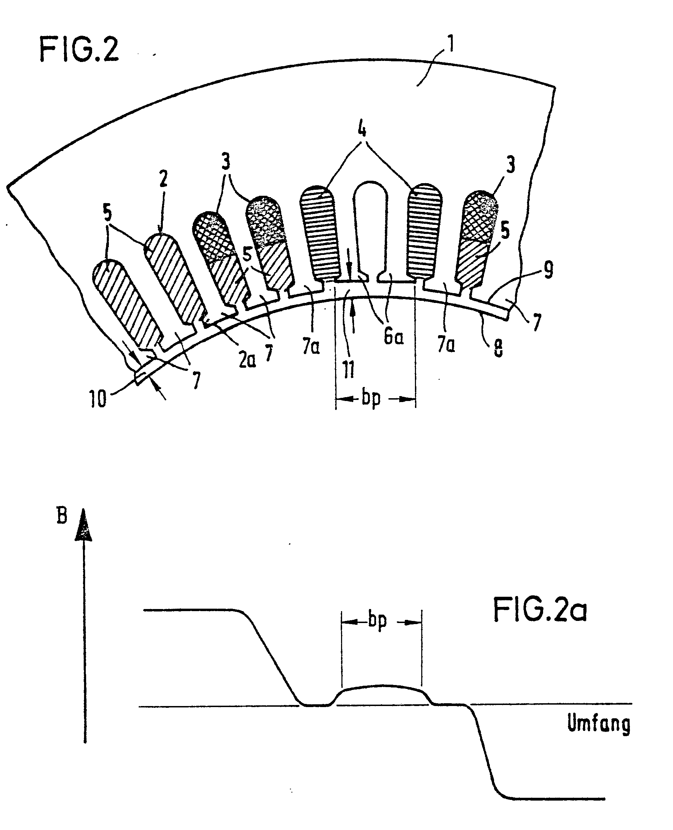

Ausführungsbeispiele der Erfindung sind in der Zeichnung dargestellt, in welcher die Figuren 1 und 1a sowie 2 und 2a den Stand der Technik veranschaulichen, und werden im folgenden näher beschrieben. Es zeigen :

Figur 1 einen Ständerblechschnitt einer Gleichstrommaschine mit einem gleichmäßigen Luftspalt.

Figur 1a den hierzu gehörenden Verlauf der Luftspaltinduktion

Figur 2 einen Ständerblechschnitt einer Gleichstrommaschine mit einem vergrößerten Luftspalt im Bereich eines Wendepols

Figur 2a den hierzu gehörenden Verlauf der Luftspaltinduktion

Figur 3 einen Ständerblechschnitt einer Gleichstrommaschine mit einem vergrößerten Luftspalt im Bereich eines Wendepols und der angrenzenden Hauptpole

Figur 4 einen Ständerabschnitt einer Gleichstrommaschine wie Fig. 3, jedoch mit verlängerten Nutschlitzen

Figur 5 einen Ständerblechschnitt einer Gleichstrommaschine mit einem vergrößerten Luftspalt im Bereich eines zum Rotor vorgewölbten bogenflächigen Wendepols und senkrecht zur Symmetrieachse eines Zahnes liegender benachbarter Hauptpole

Figur 5a den zugehörigen Verlauf der Luftspaltinduktion

Figur 6 einen Ständerblechschnitt einer Gleichstrommaschine wie Fig. 5, jedoch ohne freie Nut in der Mitte eines Wendepoles.

In Fig. 1 ist das Ständerblech mit 1 bezeichnet, welches gleichmäßig am Umfang verteilte Nuten 2 gleicher Größe enthält. Diese Nuten weisen zum Luftspalt hin jeweils einen Nutschlitz 2a auf. In den Nuten sind die am Umfang verteilten Wicklungen erkennbar. Hierzu gehören die Hauptfelderregerwicklung 3, die hier jeweils in zwei Nuten auf jeder Hauptpolseite verteilt ist, ferner die Wendefeldwicklung 4, die den aus zwei Ständerzähnen gebildeten Wendepol umschlingt und schließlich eine Kompensationswicklung 5, die in den über den Bereich des Hauptpolbogens verteilten Nuten angeordnet ist. Hierbei befindet sich die Kompensationswicklung 5 einmal allein in einer Nut 2 und zum anderen gemeinsam mit der Hauptfelderregerwicklung in einer Nut.

Die einzelnen Ständerzähne sind hierbei als Wendepole 6 bzw. Hauptpole 7 ausgebildet. Die zwischen Hauptfelderregerwicklung und Wendefeldwicklung liegenden Ständerzähne 7a bilden eine Pollücke. Der Wendepol 6 besteht aus zwei benachbarten Ständerzähnen, wobei die dazwischen liegende Nut 2 nicht benutzt ist. Das im Inneren des Ständerblechs 1 angeordnete Ankerblech ist in seinem äußeren Umfang mit 8 angedeutet. Die Ständerzähne bilden mit den unteren Begrenzungsflächen der Polschuhe den Innendurchmesser 9 des Ständers. Zwischen dem äußeren Umfang des Ankerblechs 8 und dem Innendurchmesser 9 des Ständerblechs bildet sich ein gleichmäßiger Luftspalt 10. Der Abstand zwischen den Innenseiten der Nutschlitze 2a für die Wendefeldwicklung 4 ist die Wendepolbreite $b_p$.

Die Fig. 1a zeigt den Verlauf der Luftspaltinduktionskurve, bevorzugt im Bereich des Wendepols mit einem konstanten Wert über der Wendepolbreite $b_p$, bedingt durch den konstanten Luftspalt.

Die Fig. 2 zeigt die gleiche Anordnung wie Fig. 1, jedoch mit einem gegenüber dem gleichmäßigen Luftspalt 10 vergrößerten Wendefeldluftspalt 11. Hierbei ist der aus zwei Zähnen 6a gebildete Wendepol in der Weise verkürzt, daß die dem Rotor zugewandten Stirnflächen der beiden Zähne in einer gemeinsamen zur Symmetrieachse beider Zähne in einer gemeinsamen zur Symmetrieachse beider Zähne senkrechten Ebene liegen. Bedingt durch diesen Verlauf ist der Luftspalt über der Wendepolbreite $b_p$ nicht konstant, sondern vergrößert sich zu den Kanten des Wendepols hin.

Fig. 2a zeigt die zu der Anordnung nach Fig. 2 gehörende Kurve der Luftspaltinduktion, die im Bereich des Wendepols einen zu den Polkanten hin abnehmenden Verlauf zeigt und damid den Anforderungen für lineare Stromwendung entgegenkommt.

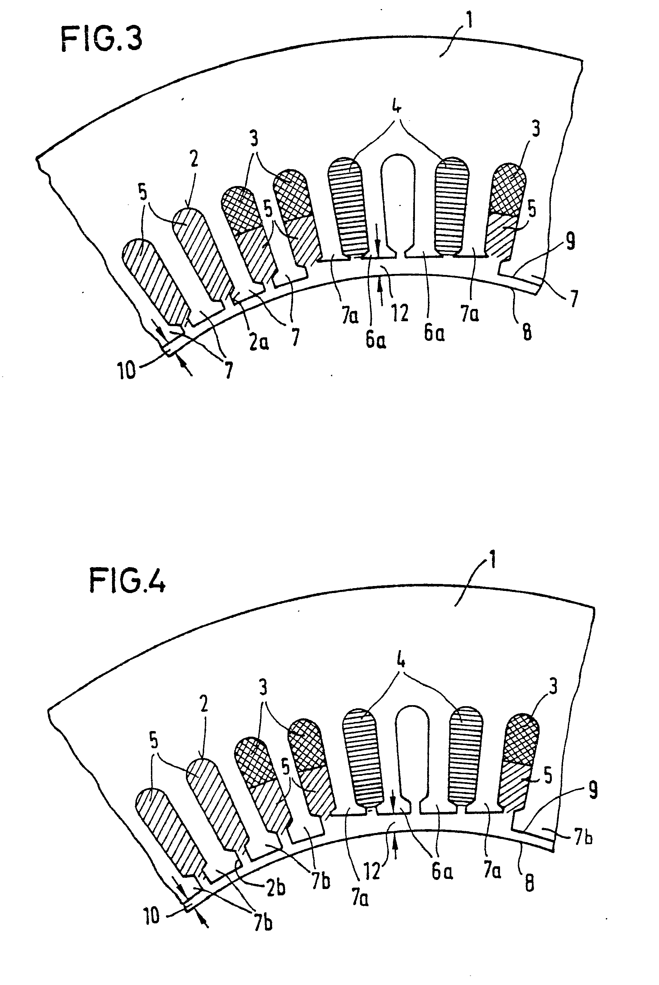

In Fig. 3 ist die Verkürzung der Zähne 6a bzw. 7a auf den gesamten Bereich der Hauptpollücke erweitert. Damit sind auch die den Wendepolzähnen 6a benachbarten Ständerzähne 7a verkürzt und es entsteht ein sich erweiternder Luftspalt 12. Mit dieser Maßnahme werden die Streueinflüsse im Bereich zwischen Haupt- und Wendepol verkleinert.

Fig. 4 zeigt eine Anordnung, wie in Fig. 3, jedoch sind nunmehr die Ständernuten 2 mit verlängerten Nutschlitzen 2b versehen, die verhindern, daß durch die Verkürzung der Zähne eine zu große Öffnung der Nuten eintritt, und dadurch die Befestigung der Wicklung in derselben unsicher wird. Mit den verlängerten Nutschlitzen 2b entstehen Ständerzähne 7b mit Polschuhen, die gegenüber der Ausführung gemäß Fig. 1 bis 3 vergrößert sind.

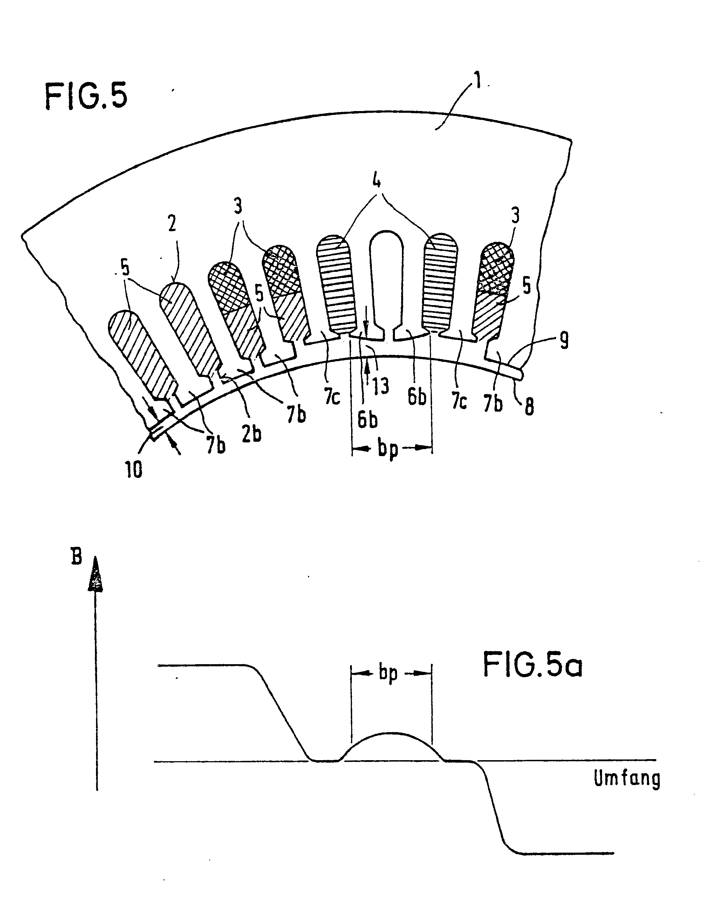

Nach Fig. 5 ist der Wendepol auch mit einer gegen den Rotor vorgewölbten Bogenfläche ausgeführt. Hierzu sind die Wendepolzähne 6b so ausgeführt, daß ihre Polschuhe an der Symmetrieachse des Wendepoles einen kleineren Abstand zum Ankerblech aufweisen als ihre äußeren Kanten. Die den Wendepolzähnen 6b benachbarten verkürzten Ständerzähnen 7c der Hauptfelderregerwicklung 3 liegen mit ihren dem Rotor zugewandten Stirnflächen jeweils senkrecht zur Symmetrieachse des zugehörigen Zahnes. Dadurch entsteht ein sich erweiternder Luftspalt 13 mit mittig einwärts gewölbter äußerer Begrenzungsfläche.

Fig. 5 zeigt den zugehörigen Verlauf der Luftspaltinduktion. Durch die Formgebung der Haupt- und Wendepole wird eine optimale Anpassung des Induktionsverlaufs im Wendefeldluftspalt an den Verlauf der Induktivitätskurve der Ankernut erreicht.

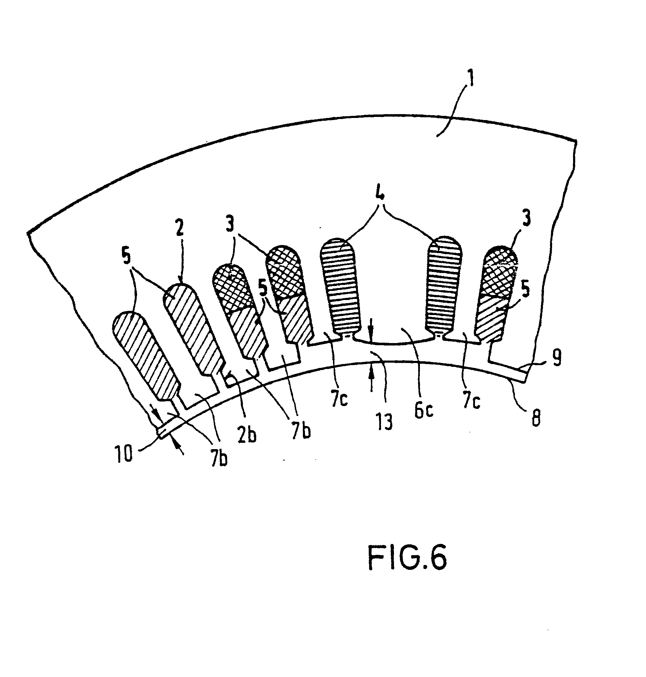

Nach Fig. 6 ist das Ständerblech 1 entsprechend Fig. 5 so ausgeführt, daß die Wendepole jeweils aus miteinander vereinigten zwei oder mehreren benachbarten Ständerzähnen bestehen, wobei also der Zwischenraum zwischen den Zähnen massiv ausgeführt ist und insgesamt ein einziger massiver Wendepolzahn 6c entsteht.

## Patentansprüche

1. Gleichstrommaschine, mit einem vollgeblechten magnetischen Kreis, mit einem genuteten Ständer, mit in getrennten Nuten liegender Hauptfelderreger- (5) und Wendefeldwicklung (4), wobei die Zähne (6a) zwischen den Nuten im Bereich der Wendefeldwicklung (4) gegenüber denen (7) im Bereich der Hauptfelderregerwicklung (5) verkürzt sind, dadurch gekennzeichnet, daß die Nuten (2) gleichmäßig am Umfang verteilt sind, daß alle Nuten gleiche Größe haben, daß die Zähne (7a) zwischen der Hauptfelderregerwicklung (5) und der Wendefeldwicklung (4) ebenfalls verkürzt sind, und daß die dem Rotor zugewandten Stirnflächen der jeweils eine Gruppe bildenden, verkürzten Zähne (6a, 7a) in einer gemeinsamen, zur Symmetrieachse dieser Gruppe senkrechten Ebene liegen (Fig. 3).

2. Gleichstrommaschine, mit einem vollgeblechten magnetischen Kreis, mit einem genuteten Ständer, mit in getrennten Nuten liegender Hauptfelderreger- (5) und Wendefeldwicklung (4), wobei die Zähne (6b) zwischen den Nuten im Bereich der Wendefeldwicklung (4) gegenüber denen (7) im Bereich der Hauptfelderregerwicklung (5) verkürzt sind, dadurch gekennzeichnet, daß die Nuten (2) gleichmäßig am Umfang verteilt sind, daß alle Nuten gleiche Größe haben, daß die Zähne (7c) zwischen der Hauptfelderregerwicklung (5) und der Wendefeldwicklung (4) ebenfalls verkürzt sind, daß die dem Rotor zugewandten Stirnflächen dieser Zähne (7c) jeweils senkrecht zur Symmetrieachse des zugehörigen Zahnes liegen, während die dem Rotor zugewandten Stirnflächen der dazwischenliegenden, wenigstens jeweils zwei Zähne (6b) auf einer zur gemeinsamen Symmetriachse dieser Zähne symmetrischen, gegen den Rotor vorgewölbten Bogenfläche liegen (Fig. 5).

3. Gleichstrommaschine nach Anspruch 2, dadurch gekennzeichnet, daß die zwischen den die Pollücke begrenzenden Ständerzähnen (7c) der Haupterregerwicklung (5) liegenden Zähne (6b) der Wendefeldwicklung (4) zu einem einzigen, massiven, in an sich bekannter Weise verbreiterten Wendepolzahn (6c) vereinigt sind, dessen dem Rotor zugewandte Stirnfläche eine zu seiner Achse symmetrische, gegen den Rotor vorgewölbte Bogenfläche bildet (Fig. 6).

4. Gleichstrommaschine nach einem der Ansprüche 1 bis 3, dadurch gekennzeichnet, daß die radiale Lage der Nuträume so gewählt und die Länge der Nutschlitze 2a zwischen nicht verkürzten Ständerzähnen derart bemessen ist, daß alle Nuten (2) eine gleich große Öffnung aufweisen (Fig. 4).

5. Gleichstrommachine nach einem der Ansprüche 1 bis 4, dadurch gekennzeichnet, daß die Wendepolzähne (6a, b, c) und ihre benachbarten Ständerzähne (7a, b, c) durch Nachstanzen verkürzt sind.

## Claims

1. A d.c. generator, having a laminated magnetic circuit, a slotted stator, a main field exciting winding (5) and a commutating winding (4), the teeth (6a) between the slots in the region of the commutating winding (4) being shortened as compared with those (7) in the region of the main field exciting winding (5), characterized in that the slots (2) are uniformly distributed on the periphery, all slots are of the same size, the teeth (7a) between the main field exciting winding (5) and the commutating winding (4) are likewise shortened, and the end faces — towards the rotor — of the shortened teeth (6a, 7a) which form a group in each case lie in a common plane at right angles to the axis of symmetry of the said group (Fig. 3).

2. A d.c. generator, having a laminated magnetic circuit, a slotted stator, a main field exciting winding (5) and a commutation winding (4), the teeth (6b) between the slots in the region of the commutating winding (4) being shortened as compared with those (7) in the region of the main field exciting winding (5), characterized in that the slots (2) are uniformly distributed on the periphery, all slots are of the same size, the teeth (7c) between the main field exciting winding (5) and the commutating winding (4) are likewise shortened, the end faces — towards the rotor — of the said teeth (7c) lie at right angles in each case to the axis of symmetry of the respective tooth, while the end faces — towards the rotor — of the interposed teeth (6b) of which there are at least two lie on a curved surface symmetrical to the common axis of symmetry of the said teeth and curved towards the rotor (Fig. 5).

3. A d.c. generator according to Claim 2, characterized in that the teeth (6b) — lying between the stator teeth (7c) of the main exciting winding (5) defining the pole gap — of the commutating winding (4) are joined to form a single solid commutating pole tooth (6c) which is enlarged in a manner known per se and whose end face towards the rotor forms a curved surface symmetrical to its axis and curved towards the rotor (Fig. 6).

4. A d.c. generator according to any one of Claims 1 to 3, characterized in that the radial position of the slot spaces is selected in such a way and the length of the slot apertures (2a) between non-shortened stator teeth is dimensioned in such a way that all the slots (2) have an equally large opening (Fig. 4).

5. A d.c. generator according to any one of Claims 1 to 4, characterized in that the commutating pole teeth (6a, b, c) and their adjacent stator teeth (7a, b, c) are shortened by subsequent punching.

**Revendications**

1. Moteur à courant continu à circuit magnétique entièrement feuilleté à stator à rainures, avec des enroulements d'excitation de champ principal (5) et de champ de commutation (4), placés dans des rainures distinctes, les dents (6a) entre les rainures dans la zone de l'enroulement du champ de commutation (4) étant raccourcies par rapport aux dents (7) dans la zone de l'enroulement d'excitation du champ principal (5), caractérisé en ce que les rainures (2) sont réparties régulièrement à la périphérie, en ce que toutes les rainures ont les mêmes dimensions, en ce que les dents (7a) entre l'enroulement d'excitation du champ principal (5) et l'enroulement du champ de commutation (4) sont également raccourcies et en ce que les surfaces frontales des dents raccourcies (6a, 7a) forment un groupe, surfaces tournées vers le rotor, sont situées dans un plan commun perpendiculaire à l'axe de symétrie de ce groupe (figure 3).

2. Machine à courant continu à circuit magnétique entièrement feuilleté, avec un stator à rainures, avec enroulements d'excitation du champ principal (5) et du champ de commutation (4) placés dans des rainures distinctes, les dents (6b) entre les rainures dans la zone de l'enroulement de champ commutation (4) étant raccourcies par rapport aux dents (7) dans la zone de l'enroulement d'excitation du champ principal (5), caractérisée en ce que les rainures (2) sont réparties régulièrement à la périphérie, en ce que toutes les rainures ont les mêmes dimensions, en ce que les dents (7c) entre l'enroulement d'excitation du champ principal (5) et l'enroulement du champ de commutation (4) sont également raccourcies, en ce que les surfaces frontales de ces dents (7c) tournées vers le rotor, sont chaque fois perpendiculaires à l'axe de symétrie de la dent correspondante alors que les surfaces frontales tournées vers le rotor, des dents intermédiaires (6b) à chaque fois au moins au nombre de deux, sont situées sur une surface d'arc bombée de façon convexe vers le rotor, symétrique par rapport à l'axe de symétrie commun de ces dents (figure 5).

3. Machine à courant continu selon la revendication 2, caractérisée en ce que les dents (6b) de l'enroulement de champ de commutation (4), qui sont situées entre les dents de stator (7c) de l'enroulement d'excitation du champ principal (5) et qui délimitent l'intervalle polaire, sont réunies en une dent de pôle de commutation (6c), élargie de façon connue en soi, pleine et unique, et dont la surface frontale tournée vers le rotor forme une surface d'arc bombée de façon convexe en direction du rotor, et symétrique par rapport à son axe (figure 6).

4. Machine à courant continu selon l'une des revendications 1 à 3, caractérisée en ce que la position radiale des volumes des rainures est choisie de façon telle et la longueur des fentes de rainures (2a) entre les dents de stator non raccourcies est dimensionnée de façon que toutes les rainures (2) présentent une ouverture de même dimension (figure 4).

5. Machine à courant continu selon l'une des revendications 1 à 4, caractérisée en ce que les dents du pôle de commutation (6a, b, c) et leurs dents de stator voisines (7a, b, c) sont raccourcies par estampage de finition.

**FIG.1**

**FIG.1a**

FIG.2

5 2 3 4 3

5 5

9

10 7 2a 7 7a 6a 7a 8 7

11

bp

B

bp

FIG.2a

Umfang

**0 042 048**

**FIG.3**

**FIG.4**

3

## FIG.5

## FIG.5a

FIG.6